(19)

**Europäisches Patentamt**
**European Patent Office**
**Office européen des brevets**

(11) **EP 3 301 926 A1**

(12) **EUROPEAN PATENT APPLICATION**

(43) Date of publication:
**04.04.2018 Bulletin 2018/14**

(51) Int Cl.:
**H04N 19/463** *(2014.01)*  **H04N 19/59** *(2014.01)*
**H04N 19/593** *(2014.01)*  **H04N 19/597** *(2014.01)*

(21) Application number: **16306287.0**

(22) Date of filing: **30.09.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Thomson Licensing**
**92130 Issy-les-Moulineaux (FR)**

(72) Inventors:
• **DRAZIC, Valter**
**35576 CESSON-SÉVIGNÉ (FR)**
• **DOYEN, Didier**
**35576 CESSON-SÉVIGNÉ (FR)**
• **KERBIRIOU, Paul**
**35576 CESSON-SÉVIGNÉ (FR)**

(74) Representative: **Coda, Sandrine**
**TECHNICOLOR**
**1-5, rue Jeanne d'Arc**
**92130 Issy-les-Moulineaux (FR)**

(54) **A METHOD AND A DEVICE FOR RECONSTRUCTING A POINT CLOUD REPRESENTATIVE OF A SCENE USING LIGHT-FIELD DATA**

(57) The present invention relates to the reconstruction of point cloud representing a scene. Point cloud data take up large amounts of storage space which makes storage cumbersome and processing less efficient. To this end, it is proposed a method for encoding a signal representative of a scene comprising parameters representing the rays of light sensed by the different pixels of the sensor are mapped on the sensor. A second set of encoded parameters are used to reconstruct the light-field content from the parameters representing the rays of light sensed by the different pixels of the sensor, a third set of parameters representing the depth an intersection of said ray of light represented by said first set of parameters with at least an object of said scene and a fourth set of parameters representing color data are used to reconstruct the point cloud on the receiver side.

**FIG. 9**

EP 3 301 926 A1

**Description**

TECHNICAL FIELD

The present invention relates to the transmission of sets of data and metadata and more particularly to the transmission of data enabling the reconstruction of a point cloud representing a scene.

## BACKGROUND

A point cloud is a well-known way to represent a 3D (three-dimensional) scene in computer graphic. Representing a scene as a point cloud help to see different point of view of this scene. In a point cloud for each point of coordinates (x,y,z) a in 3D space corresponds a RGB value. However, the scene is only represented as a collection of point in space without strong continuity.

Compressing data representing a point cloud is not an easy task. Indeed, since all the points belonging to the point cloud are not located in a simple rectangular shape as in standard video, thus the way to encode these data is not straightforward.

Furthermore, point cloud representation take up large amounts of storage space which makes storage cumbersome and processing less efficient.

The present invention has been devised with the foregoing in mind.

SUMMARY OF INVENTION

According to a first aspect of the invention there is provided a computer implemented method for encoding a signal representative of a scene obtained from an optical device, said method comprising encoding, for at least one pixel of a sensor of said optical device:

- a first set of parameters representing a ray of light sensed by said pixel,
- a second set of parameters intended to be used to reconstruct said ray of light from the first set of parameters,
- a third set of parameters representing a location along an optical axis of the optical device of an intersection of said ray of light represented by said first set of parameters with at least an object of said scene,
- a fourth set of parameters representing color data of said object of said scene sensed by said pixel,
  said third set of parameters being for reconstructing a point cloud representing said scene together with said fourth set of parameters and said reconstructed ray of light.

The parameters transmitted according to the encoding method according to an embodiment of the invention are independent of the optical system used to acquire the scene intended to be transmitted and processed by a receiving device.

In the method according to an embodiment of the invention, the parameters representing the rays of light sensed by the different pixels of the sensor of the optical system, i.e. the parameters of the first set of parameters, are mapped on the sensor. Thus, these parameters can be considered as pictures. For example, when a ray of light sensed by a pixel of the optical system is represented by four parameters, the parameters representing the rays of light sensed by the pixels of the sensor of the optical system are grouped in four pictures.

Such pictures can be encoded and transmitted according to video standards such as MPEG-4 part 10 AVC (also called h264), h265/HEVC or their probable successor h266, and transmitted in a joined video bitstream. The second encoded set may be encoded using Supplemental enhancement information (SEI) messages. The format defined in the method according to an embodiment of the invention enables a strong compression of the data to be transmitted without introducing any strong error (lossless coding) or a limited amount of errors (lossy coding).

The method according to an embodiment of the invention is not limited to data directly acquired by an optical device. These data may be Computer Graphics Image (CGI) that are totally or partially simulated by a computer for a given scene description. Another source of data may be post-produced data that are modified, for instance color graded, light-field data obtained from an optical device or CGI. It is also now common in the movie industry to have data that are a mix of both data acquired using an optical acquisition device, and CGI data. It is to be understood that the pixel of a sensor can be simulated by a computer-generated scene system and, by extension, the whole sensor can be simulated by said system. From here, it is understood that any reference to a "pixel of a sensor" or a "sensor" can be either a physical object attached to an optical acquisition device or a simulated entity obtained by a computer-generated scene system.

Such an encoding method enables to encode in a compact format data for reconstructing a point cloud representing said scene.

According to an embodiment of the encoding method, at least one parameter of the first set of parameters represents a distance between a coordinate of said ray of light and a plane fitting a set of coordinates of a plurality of rays of light sensed by a plurality of pixels of the optical system, and at least one parameter of the second set of parameters represents coordinates of the fitting plane.

Encoding the distance between a coordinate of the ray of light and a plane fitting a set of coordinates of a plurality of rays of light sensed by the different pixels of the sensor enables compressing the data to be transmitted since the amplitude between the different values of the computed distances is usually lower than the amplitude between the different values of the coordinates.

According to an embodiment of the encoding method, at least one parameter of the first set of parameters represents :

- a difference between a value representing the ray of light sensed by said pixel and a value representing a ray of light sensed by another pixel preceding said pixel in a row of the sensor, or
- when said pixel is the first pixel of a row of the sensor, a difference between a value representing the ray of light sensed by said pixel and a value representing a ray of light sensed by the first pixel of a row preceding the row to which said pixel belongs.

The value representing the ray of light could be either, the coordinates representing the ray of light or, the distance between the coordinates and planes fitting sets of coordinates of a plurality of rays of light sensed by the different pixels of the sensor.

This enables compressing the data by reducing the amplitude between the different values of the parameters to be transmitted.

According to an embodiment of the encoding method, independent codecs are used to encode the parameters of the first set of parameters.

According to an embodiment of the encoding method, when the second set of parameters comprises a parameter indicating that the first set of parameters is unchanged since a last transmission of the first set of parameters, only said second set of parameters is transmitted.

This enables to reduce the amount of data to be transmitted to the decoding devices.

Another object of the invention concerns a device for encoding a signal representative of a scene obtained from an optical device, said device comprising a processor configured to encode, for at least one pixel of a sensor of said optical device:

- a first set of parameters representing a ray of light sensed by said pixel,
- a second set of parameters intended to be used to reconstruct said ray of light from the first set of parameters,
- a third set of parameters representing a location along an optical axis of the optical device of an intersection of said ray of light represented by said first set of parameters with at least an object of said scene,
- a fourth set of parameters representing color data of said object of said scene sensed by said pixel,
  said third set of parameters being for reconstructing a point cloud representing said scene together with said fourth set of parameters and said reconstructed ray of light.

Another aspect of the invention concerns a method for reconstructing a point cloud representing a scene obtained from an optical device, said method comprising,:

- decoding a signal comprising :

  • a first set of parameters representing a ray of light sensed by sat least one pixel of a sensor of said optical device,
  • a second set of parameters intended to be used to reconstruct the light-field content from the decoded first set of parameters,
  • a third set of parameters representing a location along an optical axis of the optical device of an intersection of said ray of light represented by said first set of parameters with at least an object of said scene,
  • a fourth set of parameters representing color data of said object of said scene sensed by said pixel,

- reconstructing said point cloud based on the decoded first set of parameters, the decoded second set of parameters, the decoded third set of parameters and the decoded fourth set of parameters.

According to an embodiment of the invention, reconstructing said point cloud consists in:

- computing for at least one pixel of the sensor :

- a location in a three-dimensional space of a point corresponding to the intersection of said ray of light with at least an object of said scene,
- a viewing direction along which said point is viewed by the optical device,

- associating to said computed point the parameter representing the color data sensed by said pixel of the sensor.

Another aspect of the invention concerns a device for reconstructing a point cloud representing a scene obtained from an optical device, said device comprising a processor configured to :

- decode a signal comprising :

- a first set of parameters representing a ray of light sensed by sat least one pixel of a sensor of said optical device,
- a second set of parameters intended to be used to reconstruct the light-field content from the decoded first set of parameters,
- a third set of parameters representing a location along an optical axis of the optical device of an intersection of said ray of light represented by said first set of parameters with at least an object of said scene,
- a fourth set of parameters representing color data of said object of said scene sensed by said pixel,

- reconstruct said point cloud based on the decoded first set of parameters, the decoded second set of parameters, the decoded third set of parameters and the decoded fourth set of parameters.

Another aspect of the invention concerns a signal transmitted by a device for encoding a signal representative of a scene obtained from an optical device, said signal carrying, for at least one pixel of a sensor of said optical device, a message comprising :

- a first set of parameters representing a ray of light sensed by said pixel,
- a second set of parameters intended to be used to reconstruct said ray of light from the first set of parameters,
- a third set of parameters representing a location along an optical axis of the optical device of an intersection of said ray of light represented by said first set of parameters with at least an object of said scene,
- a fourth set of parameters representing color data of said object of said scene sensed by said pixel, said third set of parameters being for reconstructing a point cloud representing said scene together with said fourth set of parameters and said reconstructed ray of light.

Another objet of the invention is a digital file comprising data representative of a scene obtained from an optical device, said data comprising, for at least one pixel of a sensor of said optical device:

- a first set of parameters representing a ray of light sensed by said pixel,
- a second set of parameters intended to be used to reconstruct said ray of light from the first set of parameters,
- a third set of parameters representing a location along an optical axis of the optical device of an intersection of said ray of light represented by said first set of parameters with at least an object of said scene,
- a fourth set of parameters representing color data of said object of said scene sensed by said pixel, said third set of parameters being for reconstructing a point cloud representing said scene together with said fourth set of parameters and said reconstructed ray of light.

Some processes implemented by elements of the invention may be computer implemented. Accordingly, such elements may take the form of an entirely hardware embodiment, an entirely software embodiment (including firmware, resident software, micro-code, etc.) or an embodiment combining software and hardware aspects that may all generally be referred to herein as a "circuit", "module" or "system'. Furthermore, such elements may take the form of a computer program product embodied in any tangible medium of expression having computer usable program code embodied in the medium.

Since elements of the present invention can be implemented in software, the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

BRIEF DESCRIPTION OF THE DRAWINGS

Embodiments of the invention will now be described, by way of example only, and with reference to the following drawings in which:

**Figure 1** is a block diagram of a light-field camera device in accordance with an embodiment of the invention;
**Figure 2** is a block diagram illustrating a particular embodiment of a potential implementation of light-field data formatting module,
**Figure 3** illustrates a ray of light passing through two reference planes $P_1$ and $P_2$ used for parameterization,
**Figure 4** illustrates a ray of light passing through a reference plane $P_3$ located at known depths $z_3$,
**Figure 5** is a flow chart illustrating the steps of a method for formatting the light-field data according to an embodiment of the invention,
**Figure 6** is a flow chart illustrating the steps of a method for encoding a signal representative of a scene obtained from the optical device according to an embodiment of the invention,
**Figure 7** is a flow chart illustrating the steps of a method for formatting the light-field data according to an embodiment of the invention,
**Figure 8** represents the $\chi_{i_{u,v}}$ maps, $\chi_{i_{u,v}}'''$ maps or $\Delta\chi_{i_{u,v}}$ maps when transmitted to a receiver using four independent monochrome codecs,
**Figure 9** represents the $\chi_{i_{u,v}}$ maps, $\chi_{i_{u,v}}'''$ maps or $\Delta\chi_{i_{u,v}}$ maps when grouped in a single image,
**Figure 10** represents a ray of light passing through two reference planes $P_1$ and $P_2$ used for reconstructing a point in a 3D space according to an embodiment of the invention,
**Figure 11** is a schematic block diagram illustrating an example of an apparatus for reconstructing a point cloud according to an embodiment of the present disclosure,
**Figure 12** is a flow chart illustrating the steps of a method for reconstructing a point cloud representative of a scene obtained from the optical device according to an embodiment of the invention.

DETAILED DESCRIPTION

As will be appreciated by one skilled in the art, aspects of the present principles can be embodied as a system, method or computer readable medium. Accordingly, aspects of the present principles can take the form of an entirely hardware embodiment, an entirely software embodiment, (including firmware, resident software, micro-code, and so forth) or an embodiment combining software and hardware aspects that can all generally be referred to herein as a "circuit", "module", or "system". Furthermore, aspects of the present principles can take the form of a computer readable storage medium. Any combination of one or more computer readable storage medium(a) may be utilized.

Embodiments of the invention rely on a formatting of light-field data for reconstructing a point cloud representative of a scene. Such a point cloud is to be used for further processing applications such as refocusing, viewpoint change, etc. The provided formatting enables a proper and easy reconstruction of the light-field data and of the point cloud on the receiver side in order to process it. An advantage of the provided format is that it is agnostic to the device used to acquire the light-field data and it enables the transmission of all the data necessary for the reconstruction of the point cloud representing a scene in a compact format.

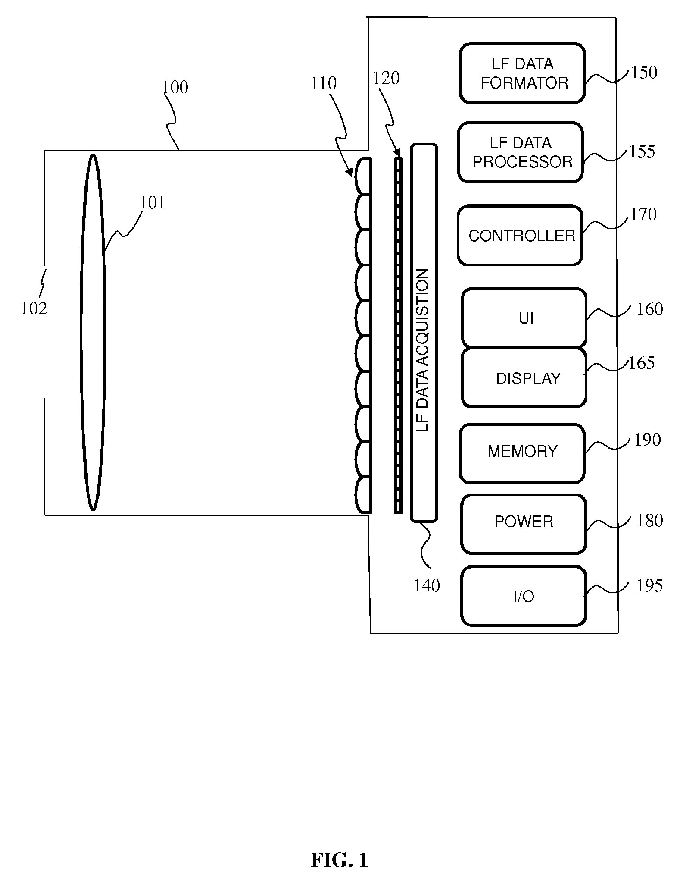

**Figure 1** is a block diagram of a light-field camera device in accordance with an embodiment of the invention. The light-field camera comprises an aperture/shutter 102, a main (objective) lens 101, a micro lens array 110 and a photosensor array. In some embodiments the light-field camera includes a shutter release that is activated to capture a light-field image of a subject or scene.

The photosensor array 120 provides light-field image data which is acquired by LF Data acquisition module 140 for generation of a light-field data format by light-field data formatting module 150 and/or for processing by light-field data processor 155. Light-field data may be stored, after acquisition and after processing, in memory 190 in a raw data format, as sub aperture images or focal stacks, or in a light-field data format in accordance with embodiments of the invention.

In the illustrated example, the light-field data formatting module 150 and the light-field data processor 155 are disposed in or integrated into the light-field camera 100. In other embodiments of the invention the light-field data formatting module 150 and/or the light-field data processor 155 may be provided in a separate component external to the light-field capture camera. The separate component may be local or remote with respect to the light-field image capture device. It will be appreciated that any suitable wired or wireless protocol may be used for transmitting light-field image data to the formatting module 150 or light-field data processor 155; for example the light-field data processor may transfer captured light-field image data and/ or other data via the Internet, a cellular data network, a WiFi network, a Bluetooth® communication protocol, and/ or any other suitable means.

The light-field data formatting module 150 is configured to generate data representative of the acquired light-field, in accordance with embodiments of the invention. The light-field data formatting module 150 may be implemented in software, hardware or a combination thereof.

The light-field data processor 155 is configured to operate on raw light-field image data received directly from the LF data acquisition module 140 for example to generate formatted data and metadata in accordance with embodiments of the invention. Output data, such as, for example, still images, 2D video streams, and the like of the captured scene may be generated. The light-field data processor may be implemented in software, hardware or a combination thereof.

In at least one embodiment, the light-field camera 100 may also include a user interface 160 for enabling a user to provide user input to control operation of camera 100 by controller 170. Control of the camera may include one or more of control of optical parameters of the camera such as shutter speed, or in the case of an adjustable light-field camera, control of the relative distance between the microlens array and the photosensor, or the relative distance between the objective lens and the microlens array. In some embodiments the relative distances between optical elements of the light-field camera may be manually adjusted. Control of the camera may also include control of other light-field data acquisition parameters, light-field data formatting parameters or light-field processing parameters of the camera. The user interface 160 may comprise any suitable user input device(s) such as a touchscreen, buttons, keyboard, pointing device, and/ or the like. In this way, input received by the user interface can be used to control and/ or configure the LF data formatting module 150 for controlling the data formatting, the LF data processor 155 for controlling the processing of the acquired light-field data and controller 170 for controlling the light-field camera 100.

The light-field camera includes a power source 180, such as one or more replaceable or rechargeable batteries. The light-field camera comprises memory 190 for storing captured light-field data and/or processed light-field data or other data such as software for implementing methods of embodiments of the invention. The memory can include external and/ or internal memory. In at least one embodiment, the memory can be provided at a separate device and/ or location from camera 100. In one embodiment, the memory includes a removable/swappable storage device such as a memory stick.

The light-field camera may also include a display unit 165 (e.g., an LCD screen) for viewing scenes in front of the camera prior to capture and/or for viewing previously captured and/or rendered images. The screen 165 may also be used to display one or more menus or other information to the user. The light-field camera may further include one or more I/O interfaces 195, such as FireWire or Universal Serial Bus (USB) interfaces, or wired or wireless communication interfaces for data communication via the Internet, a cellular data network, a WiFi network, a Bluetooth® communication protocol, and/ or any other suitable means. The I/O interface 195 may be used for transferring data, such as light-field representative data generated by LF data formatting module in accordance with embodiments of the invention and light-field data such as raw light-field data or data processed by LF data processor 155, to and from external devices such as computer systems or display units, for rendering applications.

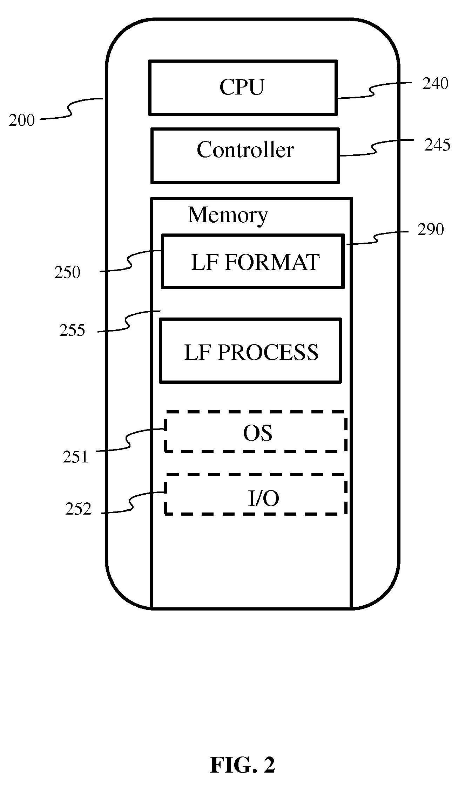

**Figure 2** is a block diagram illustrating a particular embodiment of a potential implementation of light-field data formatting module 250 and the light-field data processor 253.

The circuit 200 includes memory 290, a memory controller 245 and processing circuitry 240 comprising one or more processing units (CPU(s)). The one or more processing units 240 are configured to run various software programs and/or sets of instructions stored in the memory 290 to perform various functions including light-field data formatting and light-field data processing. Software components stored in the memory include a data formatting module (or set of instructions) 250 for generating data representative of acquired light data in accordance with embodiments of the invention and a light-field data processing module (or set of instructions) 255 for processing light-field data in accordance with embodiments of the invention. Other modules may be included in the memory for applications of the light-field camera device such as an operating system module 251 for controlling general system tasks (e.g. power management, memory management) and for facilitating communication between the various hardware and software components of the device 200, and an interface module 252 for controlling and managing communication with other devices via I/O interface ports.

Embodiments of the invention are relying on a representation of light-field data based on rays of light sensed by the pixels of the sensor of a camera or simulated by a computer-generated scene system and their orientation in space, or more generally of a sensor of an optical device. Indeed, another source of light-field data may be post-produced data that are modified, for instance color graded, light-field data obtained from an optical device or CGI. It is also now common in the movie industry to have data that are a mix of both data acquired using an optical acquisition device, and CGI data. It is to be understood that the pixel of a sensor can be simulated by a computer-generated scene system and, by extension, the whole sensor can be simulated by said system. From here, it is understood that any reference to a "pixel of a sensor" or a "sensor" can be either a physical object attached to an optical acquisition device or a simulated entity obtained by a computer-generated scene system.

Knowing that whatever the type of acquisition system, to a pixel of the sensor of said acquisition system corresponds at least a linear light trajectory, or ray of light, in space outside the acquisition system, data representing the ray of light in a three-dimensional (or 3D) space are computed.

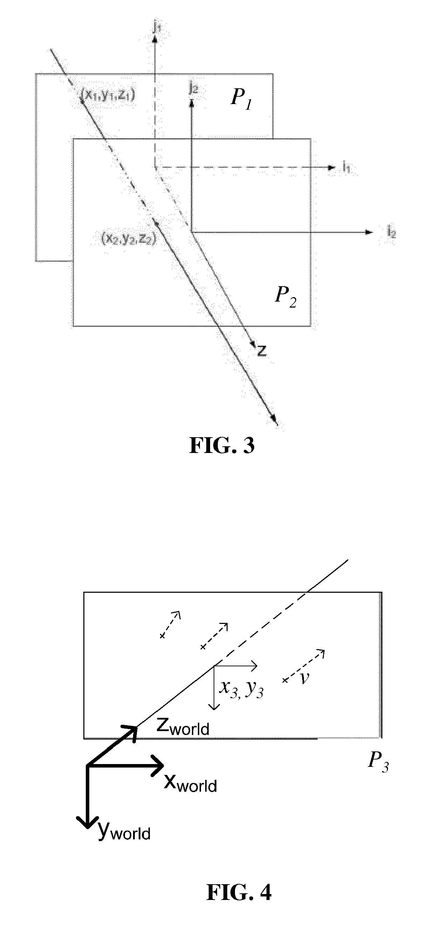

In a first embodiment, **Figure 3** illustrates a ray of light passing through two reference planes $P_1$ and $P_2$ used

for parameterization positioned parallel to one another and located at known depths $z_1$ and $z_2$ respectively. The $z$ direction, or depth direction, corresponds to the direction of the optical axis of the optical device used to obtain the light field data.

The ray of light intersects the first reference plane $P_1$ at depth $z_1$ at intersection point $(x_1,y_1)$ and intersects the second reference plane $P_2$ at depth $z_2$ at intersection point $(x_2, y_2)$. In this way, given $z_1$ and $z_2$, the ray of light can be identified by four coordinates $(x_1,y_1,x_2,y_2)$. The light-field can thus be parameterized by a pair of reference planes for parameterization $P_1$, $P_2$ also referred herein as parametrization planes, with each ray of light being represented as a point $(x_1,y_1,x_2,y_2) \in R^4$ in 4D ray space.

In a second embodiment represented on **Figure 4**, the ray of light is parametrized by means a point of intersection between a reference plane $P_3$ located at known depths $z_3$ and the ray of light. The ray of light intersects the reference plane $P_3$ at depth $z_3$ at intersection point $(x_3,y_3)$. A normalized vector $v$, which provides the direction of the ray of light in space has the following coordinates : $(v_x, v_y, \sqrt{1 - (v_x^2 + v_y^2)})$, since $v_z = \sqrt{1 - (v_x^2 + v_y^2)}$ $v_z$ is assumed to be positive and it can be recalculated knowing $v_x$ and $v_y$, the vector can be described only by its two first coordinates $(v_x, v_y)$.

According to this second embodiment, the ray of light may be identified by four coordinates $(x_3, y_3, v_x, v_y)$. The light-field can thus be parameterized by a reference plane for parameterization $P_3$ also referred herein as parametrization plane, with each ray of light being represented as a point $(x_3,y_3,v_x,v_y) \in R^4$ in 4D ray space.

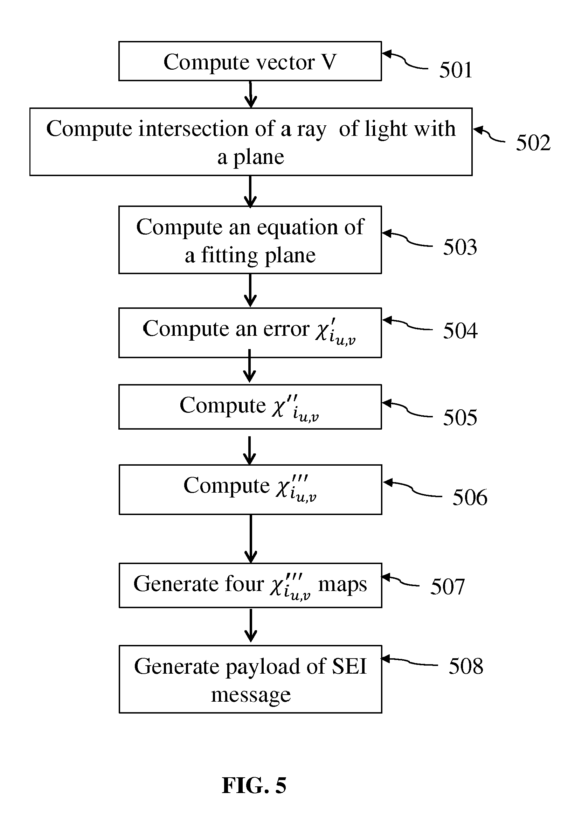

The parameters representing a ray of light in 4D ray space are computed by the light-field data formatting module 150. **Figure 5** is a flow chart illustrating the steps of a method for formatting the light-field data acquired by the camera 100 according to an embodiment of the invention. This method is executed by the light-field data formatting module 150.

In case the light-field acquisition system is calibrated using a pinhole model, the basic projection model, without distortion, is given by the following equation :

$$\begin{pmatrix} u \\ v \\ 1 \end{pmatrix} = 1/Z_c \begin{pmatrix} f & 0 & c_u & 0 \\ 0 & f & c_v & 0 \\ 0 & 0 & 1 & 0 \end{pmatrix} \begin{pmatrix} X_c \\ Y_c \\ Z_c \\ 1 \end{pmatrix} = \begin{pmatrix} f\frac{X_c}{Z_c} + c_u \\ f\frac{Y_c}{Z_c} + c_v \\ 1 \end{pmatrix}$$

where

- f is the focal length of the main lens of the camera 100,
- $c_u$ and $c_v$ are the coordinates of the intersection of the optical axis of the camera 100 with the sensor,
- $(X_c, Y_e, Z_c , 1)^T$ is the position in the camera coordinate system of a point in the space sensed by the camera,
- $(u, v, 1)^T$ are the coordinates, in the sensor coordinate system, of the projection of the point which coordinates are $(X_c, Y_c, Z_c, 1)^T$ in the camera coordinate system on the sensor of the camera.

In a step 501, the light-field data formatting module 150 computes the coordinates of a vector V representing the direction of the ray of light in space that is sensed by the pixel of the sensor which coordinates are $(u, v, 1)^T$ in the sensor coordinate system. In the sensor coordinate system, the coordinates of vector V are :

$$(u - c_u, v - c_v, f)^T.$$

In the pinhole model, the coordinates of the intersection of the ray of light sensed by the pixel which coordinates are $(u, v, 1)^T$, with a plane placed at coordinate $Z_1$ from the pinhole and parallel to the sensor plane are :

$$\left( (u - c_u)\frac{Z_1}{f}, (v - c_v)\frac{Z_1}{f}, Z_1 \right)^T$$

and are computed during a step 502.

If several acquisition are mixed, i.e. acquisition of light-field data by different types of cameras, then a single coordinate system is used. In this situation, modifications of coordinates of the points and vectors should be modified accordingly.

According to an embodiment of the invention, the sets of coordinates defining the rays of light sensed by the pixels of the sensor of the camera and computed during steps 501 and 502 are regrouped in maps. In another embodiment, the rays of light are directly computed by a computer-generated scene system that simulates the propagation of rays of light.

In an embodiment of the invention, these maps are associated with a color map and a depth map of a scene to be transmitted to a receiver. Thus in this embodiment, to each pixel (u, v) of the sensor of the camera corresponds a parameter representative of the depth data associated to a ray of light sensed by a given pixel and a parameter representative of the color data associated to the same ray of light sensed by the same given pixel and a quadruplet of floating point values ($\chi_1\ \chi_2\ \chi_3\ \chi_4$) which correspond either to ($x_1, y_1, x_2, y_2,$) when the ray of light is parameterized by a pair of reference planes for parameterization $P_1$, $P_2$ or ($x_3, y_3, v_x, v_y,$) when the ray of light is parametrized by means of a normalized vector. In the following description, the quadruplet of floating point values ($\chi_1\ \chi_2\ \chi_3\ \chi_4$) is given by :

$$\chi_1 = (u - c_u)\frac{Z_1}{f}$$

$$\chi_2 = (v - c_v)\frac{Z_1}{f}$$

$$\chi_3 = (u - c_u)\frac{Z_2}{f}$$

$$\chi_4 = (v - c_v)\frac{Z_2}{f}.$$

In another embodiment, the acquisition system is not calibrated using a pinhole model, consequently the parametrization by two planes is not recalculated from a model. Instead, the parametrization by two planes has to be measured during a calibration operation of the camera. This may be for instance the case for a plenoptic camera which includes in between the main lens and the sensor of the camera a micro-lens array.

In yet another embodiment, these maps are directly simulated by a computer-generated scene system or post-produced from acquired data.

Since a ray of light sensed by a pixel of the sensor of the camera is represented by a quadruplet ($\chi_1\ \chi_2\ \chi_3\ \chi_4$) of floating point, it is possible to put these four parameters into four maps of parameters, e.g. a first map comprising the parameter $\chi_1$ of each ray of light sensed by a pixel of the sensor of the camera, a second map comprising the parameter $\chi_2$, a third map comprising the parameter $\chi_3$ and a fourth map comprising the parameter $\chi_4$. Each of the four above-mentioned maps, called $\chi_i$ maps, have the same size as the acquired light-field image itself but have floating points content.

After some adaptations taking into account the strong correlation between parameters representing rays of light sensed by adjacent pixels and arranging the population of rays of light, and consequently the parameters that represent them, these four maps can be compressed using similar tools as for video data.

In order to compress the values of the floating points ($\chi_1\ \chi_2\ \chi_3\ \chi_4$) and thus reduce the size of the $\chi_i$ maps to be transmitted, the light-field data formatting module 150 computes, in a step 503, for each $\chi_i$ maps an equation of a plane fitting the values of said parameter $\chi_i$ comprised in the $\chi_i$ map. The equation of the fitting plane for the parameter $\chi_i$ is given by :

$$\tilde{\chi}_{i_{(u,v)}} = \alpha_i\, u + \beta_i\, v + \gamma_i$$

where u and v are the coordinates of a given pixel of the sensor of the camera.

In a step 504, for each map, parameters $\alpha_i, \beta_i, \gamma_i$ are computed to minimize the error:

$$\left\|(\chi_{i_{(u,v)}} - \alpha_i\, u - \beta_i\, v - \gamma_i)\right\|$$

The result of the computation of step 504 is a parameter :

$$\chi'_{i_{u,v}} = \chi_{i_{(u,v)}} - (\alpha_i\, u + \beta_i\, v + \gamma_i)$$

that corresponds to the difference of the value of parameter $\chi_i$ with the plane fitting the values of said parameter $\chi_i$, resulting in a much lower range of amplitude of the values comprised in the $\chi_i$ map.

It possible to compress the value $\chi'_{i_{u,v}}$ by computing $\chi''_{i_{u,v}} = \chi'_{i_{u,v}} - \min(\chi'_{i_{u,v}})$ in a step 505.

Then, in a step 506, a value $\chi'''_{i_{u,v}}$ of former parameter $\chi_i$ may be computed so that the value of parameter $\chi'''_{i_{u,v}}$ range from 0 to $2^N - 1$ included, where N is a chosen number of bits corresponding to the capacity of the encoder intend to used for encoding the light-field data to be sent. The value of the parameter $\chi'''_{i_{u,v}}$ is given by :

$$\chi'''_{i_{u,v}} = \frac{(2^N - 1) * \chi''_{i_{u,v}}}{\max(\chi''_{i_{u,v}})}$$

In a step 507, the light-field data formatting module 150 generates four maps, $\chi'''_{1_{u,v}}$ map, $\chi'''_{2_{u,v}}$ map, $\chi'''_{3_{u,v}}$ map and $\chi'''_{4_{u,v}}$ map, corresponding to each of the parameters $(\chi_1\ \chi_2\ \chi_3\ \chi_4)$ representing rays of light sensed by the pixels of the sensor of the camera.

In a step 508, the light-field data formatting module 150 generates the content of a SEI (Supplemental Enhancement Information) message. Said content of the SEI message comprising the following fixed parameters $\alpha_i$, $\beta_i$, $(\gamma_i + \min(\chi'_{i_{u,v}}))$, $\max(\chi''_{i_{u,v}})$ ) intended to be used during reciprocal computation on the receiver side to retrieve the original $\chi_{i_{u,v}}$ maps. These four parameters are considered as metadata conveyed in the SEI message the content of which is given by the following table :

Table 1

| Length (bytes) | Name | Comment |
| --- | --- | --- |
| 1 | Message Type | Value should be fixed in MPEG committee |
| 1 | Representation type | '2points coordinates' or 'one point plus one vector' |
| 4 | z1 | Z coordinate of the first plane |
| 4 | z2 | if type = '2points coordinates', Z coordinate of the second plane |
| 4 | alpha_1 | plane coefficient $\alpha$ |
| 4 | beta_1 | plane coefficient $\beta$ |
| 4 | gamma_1 | plane coefficient $\gamma + \min(\chi'_{u,v})$ |
| 4 | max_1 | $\max(\chi''_{i_{u,v}})$ |
| 4 | alpha_2 | plane coefficient $\alpha$ |
| 4 | beta_2 | plane coefficient $\beta$ |
| 4 | gamma_2 | plane coefficient $\gamma + \min(\chi'_{u,v})$ |
| 4 | max_2 | $\max(\chi''_{i_{u,v}})$ |

(continued)

| Length (bytes) | Name | Comment |
|---|---|---|
| 4 | alpha_3 | plane coefficient $\alpha$ |
| 4 | beta_3 | plane coefficient $\beta$ |
| 4 | gamma_3 | plane coefficient $\gamma + \min(\chi'_{u,v})$ |
| 4 | max_3 | $\max(\chi''_{i_{u,v}})$ |
| 4 | alpha_4 | plane coefficient $\alpha$ |
| 4 | beta_4 | plane coefficient $\beta$ |
| 4 | gamma_4 | plane coefficient $\gamma + \min(\chi'_{u,v})$ |
| 4 | max_4 | $\max(\chi''_{i_{u,v}})$ |

On the receiver side, the reciprocal computation enabling to retrieve the original $\chi_{i_{u,v}}$ maps is given by

i.

$$\chi''_{i_{u,v}} = \chi'''_{i_{u,v}} \frac{\max(\chi''_{i_{u,v}})}{2^N}$$

ii.

$$\chi_{i_{(u,v)}} = \chi''_{i_{u,v}} + \alpha_i u + \beta_i v + (\gamma_i + \min(\chi'_{i_{u,v}})).$$

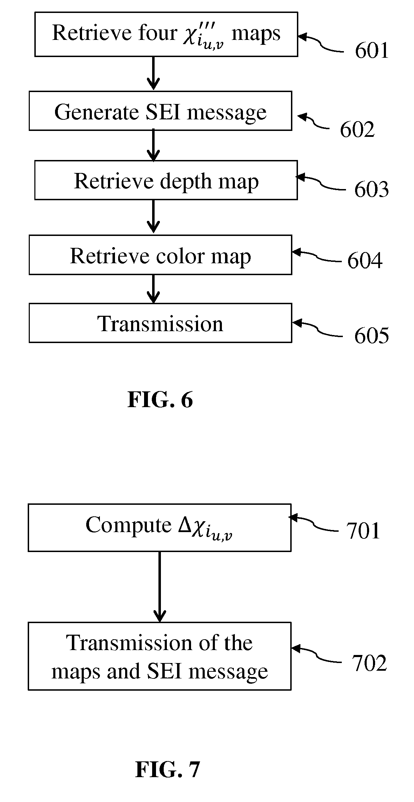

**Figure 6** is a flow chart illustrating the steps of a method for encoding a signal representative of a scene obtained from the optical device according to an embodiment of the invention. This method is executed, for example, by the light-field data processor module 155.

In a step 601, the light-field data processor module 155 retrieves the *four* $\chi'''_{i_{u,v}}$ maps generated by the light-field data formatting module 150 during step 507. The *four* $\chi'''_{i_{u,v}}$ maps maybe embedded in a message, or retrieved from a memory, etc.

In a step 602, the light-field data processor module 155 generates the SEI message comprising the following fixed parameters $\alpha_i$, $\beta_i$, $(\gamma_i + \min(\chi'_{i_{u,v}}))$, $\max(\chi''_{i_{u,v}})$ intended to be used during reciprocal computation on the receiver side to retrieve the original $\chi_{i_{u,v}}$ maps.

Ina step 603, the light-field data processor module 155 retrieves a depth map comprising depth information of an object of the scene associated to the light field content. The depth map comprises depth information for each pixel of the sensor of the camera. The depth map maybe received from another device, or retrieved from a memory, etc.

The depth information associated to a pixel of the sensor, is for example, a location along the optical axis of the optical device of an intersection of the ray of light sensed by said pixel with at least an object of said scene.

Such a depth map may be calculated, for example, by means of inter-camera disparity estimation and then converted to depth thanks to the calibration data in an embodiment comprising a plurality of cameras. There can be a depth sensor within the system which depth maps will be aligned with each camera with a specific calibration.

Associated depth data may be stored in a monochrome format and coded with a video coder (MPEG- 4 AVC, HEVC, h266,...) or an image coder (JPEG, JPEG2000, MJEG). When several sensors are present, color data and depth data can be jointly coded using the 3DHEVC (multi view coding + depth) codec.

The depth information may have two different reference in the z direction, said z direction corresponding to the direction of the optical axis of the optical device used to obtain the scene. The depth information can be whether defined related to the position of the plane z1 or to a world coordinate system. Said information are defined in a metadata message :

| Length (bytes) | Name | Comment |
| --- | --- | --- |
| 1 | Message Type | Value should be fixed in MPEG committee |
| 1 | Depth reference | 0: means reference is the world coordinate plane; 1 means reference is the plane at z1 |

In a step 604, the light-field data processor module 155 retrieves a color map comprising for example RGB information of an object of the scene associated to the light field content. The color map comprises color information for each pixel of the senor of the camera. The color maps maybe received from another device, or retrieved from a memory, etc.

In a step 605, the $\chi_{i_{u,v}}'''$ maps, the color map, the depth map and the SEI message are transmitted to at least a receiver where these data are processed in order to render a light-field content in the form of a point in a 3D (three-dimensional) space together with information related to the orientation of said point, i.e. the point of view on which the point is sensed by the pixel of the sensor.

It is possible to further decrease the size of the maps representing the light-field data before their transmission to a receiver. The following embodiments are complementary of the one consisting of minimizing the error :

$$\left\| (\chi_{i_{(u,v)}} - \alpha_i\, u - \beta_i\, v - \gamma_i) \right\|$$

In a first embodiment represented on **figure 7,** as the $\chi_{i_{uv}}$ maps contain values with low spatial frequencies, it is possible to transmit only the derivative of a signal in a direction in space.

For example, given $\chi_{i_{0,0}}$, the value of parameter $\chi_i$ associated to the pixel of coordinates (0,0), the light-field data formatting module 150 computes, in a step 601, the difference $\Delta\chi_{i_{1,0}}$ between the value $\chi_{i_{1,0}}$ of parameter $\chi_i$ associated to the pixel of coordinates (1,0) and the value $\chi_{i_{0,0}}$ of parameters $\chi_i$ associated to the pixel of coordinates (0,0) :

$$\Delta\chi_{i_{1,0}} = \chi_{i_{1,0}} - \chi_{i_{0,0}}$$

More generally, during step 701, the light-field data formatting module 150 computes a difference between a value of parameter $\chi_i$ associated to a given pixel of the sensor and a value of parameter $\chi_i$ associated to another pixel preceding the given pixel in a row of the sensor of the optical system or of a computer-generated scene system :

$$\Delta\chi_{i_{u+1,v}} = \chi_{i_{u+1,v}} - \chi_{i_{u,v}}$$

When the given pixel is the first pixel of a row of the sensor, the light-field data formatting module 150 computes a difference between a value of parameters $\chi_i$ associated to the given pixel and a value of parameter $\chi_i$ associated to the first pixel of a row preceding the row to which the given pixel belongs :

$$\Delta\chi_{i_{0,v+1}} = \chi_{i_{0,v+1}} - \chi_{i_{0,v}}$$

In a step 702, the $\Delta\chi_{i_{u,v}}$ maps, the color map, the depth map and the SEI message, generated during step 602, are transmitted to at least a receiver where these data are processed in order to render a light-field content.

In a second embodiment, as the $\chi_{i_{u,v}}$ maps, $\chi_{i_{u,v}}'''$ maps or $\Delta\chi_{i_{u,v}}$ maps contain values having very slow spatial frequencies, it is possible to perform a spatial down-sampling in both dimensions of the $\chi_{i_{u,v}}$ map and then to recover the entire $\chi_{i_{u,v}}$ map on the receiver side by making a linear interpolation between transmitted samples of said $\chi_{i_{u,v}}$ maps.

For instance if we can reduce the size of the maps from N_rows*M_columns to from N_rows /2 * M_columns/2.

At reception the maps can be extended to original size; the created holes can be filled by an interpolation method (or so-called up-sampling process). A simple bilinear interpolation is generally sufficient

$$\chi_{i_{u,v}} = (\chi_{i_{u-1,v-1}} + \chi_{i_{u+1,v-1}} + \chi_{i_{u-1,v+1}} + \chi_{i_{u+1,v+1}})/4$$

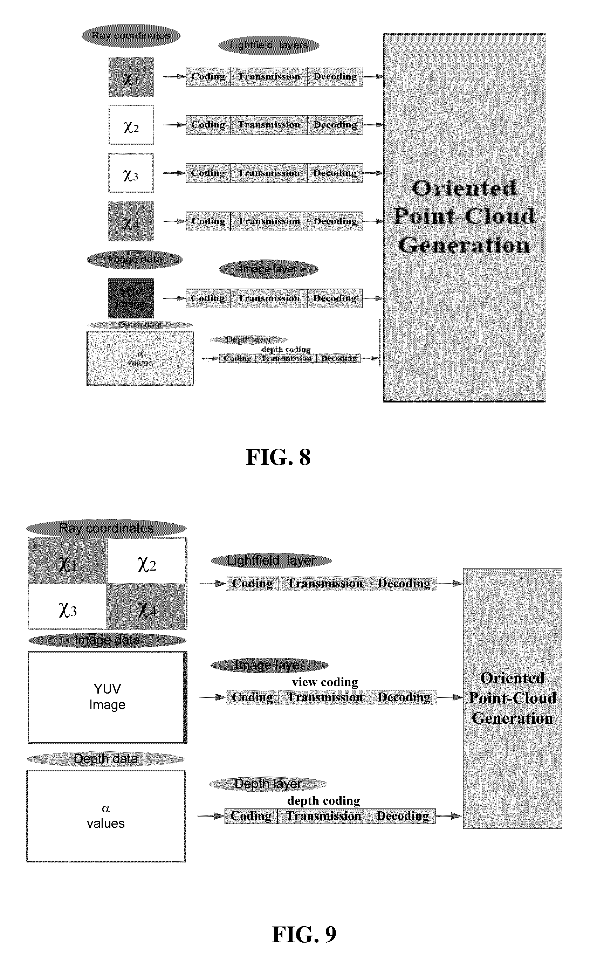

In a third embodiment represented on **figure 8**, each $\chi_{i_{u,v}}$ maps, $\chi_{i_{u,v}}'''$ maps or $\Delta\chi_{i_{u,v}}$ maps may be transmitted to a receiver using four independent monochrome codecs, such as h265/HEVC for example.

In a fourth embodiment, the $\chi_{i_{u,v}}$ maps, $\chi_{i_{u,v}}'''$ maps or $\Delta\chi_{i_{u,v}}$ maps may be grouped in a single image as represented on figure 9. In order to reach this goal, one method consists in reducing the size of the maps by a factor 2 using the subsampling method, as in the second embodiment, and then in joining the $\chi_{i_{u,v}}$ maps, $\chi_{i_{u,v}}'''$ maps or $\Delta\chi_{i_{u,v}}$ maps each in a quadrant of an image having the same size as the color map. This method is usually named "frame packing" as it packs several frame into a single one. Adequate meta-data should be transmitted, for instance in the SEI message, to signal the way the frame packing has been performed such that the decoder can adequately unpack the frames. The packed maps into a single frame can be then transmitted using a single monochrome codec, such as, but not limited to, h265/HEVC for example

In this case, the SEI message as presented in Table 1 must also contain a flag indicating a frame packing method has been used to pack the 4 maps in a single one (refer to Table1b).

Table 1b

| Length (bytes) | Name | Comment |
|---|---|---|
| 1 | Message Type | Value should be fixed in MPEG committee |
| 1 | Representation type | '2points coordinates' or 'one point plus one vector' |
| 4 | z1 | Z coordinate of the first plane |
| 4 | z2 | if type = '2points coordinates', Z coordinate of the second plane |
| 1 | Packing mode | 0: means no frame packing (separated single maps); 1: means frame packing (single 4 quadrants map) |
| 4 | alpha_1 | plane coefficient $\alpha$ |
| 4 | beta_1 | plane coefficient $\beta$ |
| 4 | gamma_1 | plane coefficient $\gamma + \min(\chi'_{u,v})$ |
| 4 | max_1 | $\max(\chi''_{i_{u,v}})$ |
| 4 | alpha_2 | plane coefficient $\alpha$ |
| 4 | beta_2 | plane coefficient $\beta$ |
| 4 | gamma_2 | plane coefficient $\gamma + \min(\chi'_{u,v})$ |
| 4 | max_2 | $\max(\chi''_{i_{u,v}})$ |
| 4 | alpha_3 | plane coefficient $\alpha$ |
| 4 | beta_3 | plane coefficient $\beta$ |
| 4 | gamma_3 | plane coefficient $\gamma + \min(\chi'_{u,v})$ |
| 4 | max_3 | $\max(\chi''_{i_{u,v}})$ |

(continued)

| Length (bytes) | Name | Comment |
|---|---|---|
| 4 | alpha_4 | plane coefficient $\alpha$ |
| 4 | beta_4 | plane coefficient $\beta$ |
| 4 | gamma_4 | plane coefficient $\gamma + \min(\chi'_{u,v})$ |
| 4 | max_4 | $\max(\chi''_{i_{u,v}})$ |

When several cameras are grouped to form a rig, it is better and more consistent to define a single world coordinate system and 2 parametrization planes common for all the cameras. Then the description message (SEI for instance) can contain common information (representation type, z1 and z2) plus the description parameters of the 4 maps ($\chi_{i_{u,v}}$ maps, $\chi'''_{i_{u,v}}$ maps or $\Delta\chi_{i_{u,v}}$) for each camera as shown in table 2.

In that case $\chi_{i_{u,v}}$ maps, $\chi'''_{i_{u,v}}$ maps or $\Delta\chi_{i_{u,v}}$ maps may be transmitted to a receiver using monochrome codecs taking into account the multi-view aspect of the configuration such as MPEG Multiview Video coding (MVC) or MPEG Multiview High Efficiency Video Coding (MV-HEVC) for example.

Table 2

| Length (bytes) | Name | Comment |
|---|---|---|
| 1 | Message Type | Value should be fixed in MPEG committee |
| 1 | Representation type | '2points coordinates' or 'one point plus one vector' |
| 4 | z1 | Z coordinate of the first plane |
| 4 | z2 | if type = '2points coordinates', Z coordinate of the second plane |
| For each set of 4 component maps | | |
| Length (bytes) | Name | Comment |
| 1 | Packing mode | 0: means no frame packing (single map); 1: means frame packing (4 quadrants) |
| 4 | alpha_1 | plane coefficient $\alpha$ |
| 4 | beta_1 | plane coefficient $\beta$ |
| 4 | gamma_1 | plane coefficient $\gamma + \min(\chi'_{u,v})$ |
| 4 | max_1 | $\max(\chi''_{i_{u,v}})$ |
| 4 | alpha_2 | plane coefficient $\alpha$ |
| 4 | beta_2 | plane coefficient $\beta$ |
| 4 | gamma_2 | plane coefficient $\gamma + \min(\chi'_{u,v})$ |
| 4 | max_2 | $\max(\chi''_{i_{u,v}})$ |
| 4 | alpha_3 | plane coefficient $\alpha$ |
| 4 | beta_3 | plane coefficient $\beta$ |
| 4 | gamma_3 | plane coefficient $\gamma + \min(\chi'_{u,v})$ |

(continued)

| Length (bytes) | Name | Comment |
|---|---|---|
| 4 | max_3 | $\max(\chi''_{i_{u,v}})$ |
| 4 | alpha_4 | plane coefficient $\alpha$ |
| 4 | beta_4 | plane coefficient $\beta$ |
| 4 | gamma_4 | plane coefficient $\gamma + \min(\chi'_{u,v})$ |
| 4 | max_4 | $\max(\chi''_{i_{u,v}})$ |

In a fifth embodiment, when modifications of the $\chi_{i_{u,v}}$ maps, $\chi'''_{i_{u,v}}$ maps or $\Delta\chi_{i_{u,v}}$ maps are null during a certain amount of time, these $\chi_{i_{u,v}}$ maps, $\chi'''_{i_{u,v}}$ maps or $\Delta\chi_{i_{u,v}}$ are marked as skipped and are not transferred to the receiver. In this case, the SEI message comprises a flag indicating to the receiver that no change has occurred on the $\chi_{i_{u,v}}$ maps, $\chi'''_{i_{u,v}}$ maps or $\Delta\chi_{i_{u,v}}$ since their last transmission. The content of such a SEI message is shown on table 3 :

Table 3

| Length (bytes) | Name | Comment |
|---|---|---|
| 1 | Message Type | Value should be fixed in MPEG committee |
| 1 | Skip_flag | 0: means further data are present; 1 means keep previous registered parameters |
| If !skip_flag | | |
| Length (bytes) | Name | Comment |
| 1 | Representation type | '2points coordinates' or 'one point plus one vector' |
| 4 | z1 | Z coordinate of the first plane |
| 4 | z2 | if type = '2points coordinates', Z coordinate of the second plane |
| For each quadrant | | |
| Length (bytes) | Name | Comment |
| 1 | Packing mode | 0: means no frame packing (single map); 1: means frame packing (4 quadrants) |
| 4 | alpha_1 | plane coefficient $\alpha$ |
| 4 | beta_1 | plane coefficient $\beta$ |
| 4 | gamma_1 | plane coefficient $\gamma + \min(\chi'_{u,v})$ |
| 4 | max_1 | $\max(\chi''_{i_{u,v}})$ |
| 4 | alpha_2 | plane coefficient $\alpha$ |
| 4 | beta_2 | plane coefficient $\beta$ |
| 4 | gamma_2 | plane coefficient $\gamma + \min(\chi'_{u,v})$ |

(continued)

| Length (bytes) | Name | Comment |
|---|---|---|
| 4 | max_2 | $\max(\chi''_{i_{u,v}})$ |
| 4 | alpha_3 | plane coefficient $\alpha$ |
| 4 | beta_3 | plane coefficient $\beta$ |
| 4 | gamma_3 | plane coefficient $\gamma + \min(\chi'_{u,v})$ |
| 4 | max_3 | $\max(\chi''_{i_{u,v}})$ |
| 4 | alpha_4 | plane coefficient $\alpha$ |
| | beta_4 | plane coefficient $\beta$ |
| 4 | gamma_4 | plane coefficient $\gamma + \min(\chi'_{u,v})$ |
| 4 | max_4 | $\max(\chi''_{i_{u,v}})$ |

In a sixth embodiment, as the modifications of acquisition system parameters, represented in the $\chi_{i_{u,v}}$ maps, $\chi'''_{i_{u,v}}$ maps or $\Delta\chi_{i_{u,v}}$ are slowly modified in time, it is worthwhile to transmit them to a receiver with a frame rate slower than the frame rate of the color map. The frequency of the transmission of the $\chi_{i_{u,v}}$ maps, $\chi'''_{i_{u,v}}$ maps or $\Delta\chi_{i_{u,v}}$ must be at least the one of the IDR frames.

In a seventh embodiment, the color maps use the YUV or RGB format and are coded with a video coder such as MPEG- 4 AVC, h265/HEVC, or h266, etc. or an image coder such as JPEG, JPEG2000, MJEG. When several cameras are used to acquire the light-field content, color maps may be coded relatively using the MV-HEVC codec.

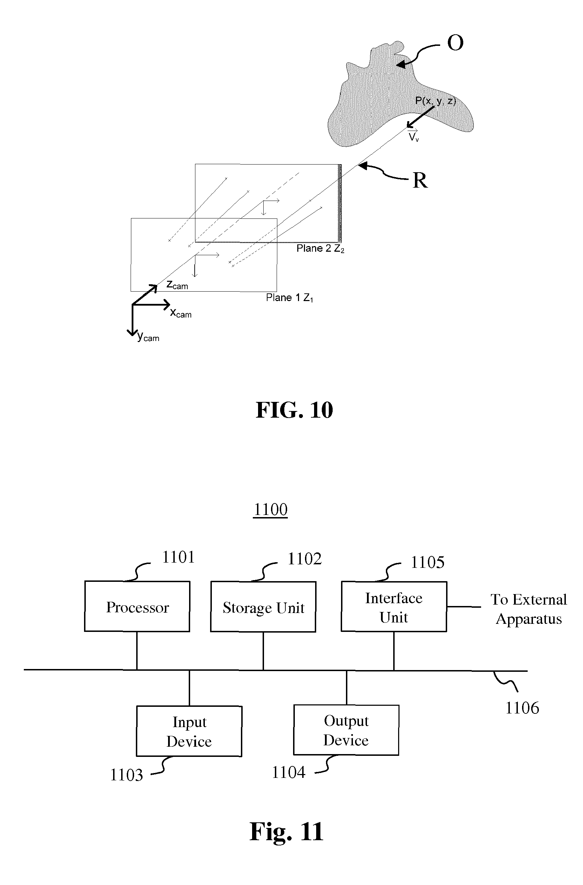

**Figure 10** represents a ray of light R sensed by a pixel of the sensor of the optical device, said ray of light R passing through two reference planes $P_1$ and $P_2$ used for reconstructing a point cloud of a scene obtained from the optical device according to an embodiment of the invention. The ray of light R intersects an object O of said scene. The direction indicating by $z_{cam}$ corresponds to the direction of the optical axis of the optical device.

**Figure 11** is a schematic block diagram illustrating an example of an apparatus for reconstructing a point cloud representing a scene according to an embodiment of the present disclosure.

The apparatus 1100 comprises a processor 1101, a storage unit 1102, an input device 1103, a display device 1104, and an interface unit 1105 which are connected by a bus 1106. Of course, constituent elements of the computer apparatus 1100 may be connected by a connection other than a bus connection.

The processor 1101 controls operations of the apparatus 1100. The storage unit 1102 stores at least one program to be executed by the processor 1101, and various data, including data of 4D light-field images captured and provided by a light-field camera, parameters used by computations performed by the processor 1101, intermediate data of computations performed by the processor 1101, and so on. The processor 1101 may be formed by any known and suitable hardware, or software, or a combination of hardware and software. For example, the processor 1101 may be formed by dedicated hardware such as a processing circuit, or by a programmable processing unit such as a CPU (Central Processing Unit) that executes a program stored in a memory thereof.

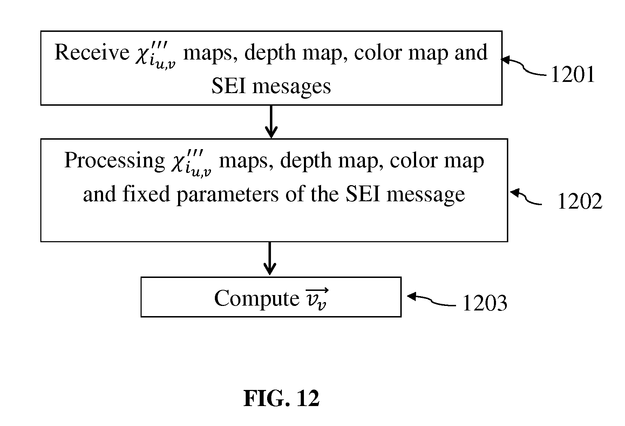

The storage unit 1102 may be formed by any suitable storage or means capable of storing the program, data, or the like in a computer-readable manner. Examples of the storage unit 1102 include non-transitory computer-readable storage media such as semiconductor memory devices, and magnetic, optical, or magneto-optical recording media loaded into a read and write unit. The program causes the processor 1101 to reconstruct a point cloud representing a scene according to an embodiment of the present disclosure as described with reference to figure 12.

The input device 1103 may be formed by a keyboard, a pointing device such as a mouse, or the like for use by the user to input commands. The output device 1104 may be formed by a display device to display, for example, a Graphical User Interface (GUI), point cloud generated according to an embodiment of the present disclosure. The input device 1103 and the output device 1104 may be formed integrally by a touchscreen panel, for example.

The interface unit 1105 provides an interface between the apparatus 1100 and an external apparatus. The interface unit 1105 may be communicable with the external apparatus via cable or wireless communication. In an embodiment, the external apparatus may be a light-field camera. In this case, data of 4D light-field images captured by the light-field camera can be input from the light-field camera to the apparatus 1100 through the interface unit 1105, then stored in the storage unit 1102.

In this embodiment the apparatus 1100 is exemplary discussed as it is separated from the light-field camera and they are communicable each other via cable or wireless communication, however it should be noted that the apparatus 1100 can be integrated with such a light-field camera. In this later case, the apparatus 1100 may be for example a portable device such as a tablet or a smartphone embedding a light-field camera.

**Figure 12** is a flow chart illustrating the steps of a method for reconstructing a point cloud representative of a scene obtained from the optical device according to an embodiment of the invention. This method is executed, for example, by the processor 1101 of the apparatus 1100.

In a step 1201, the apparatus 1100 receives the $\chi_{i_{u,v}}'''$ maps, the color map, the depth map and the SEI messages associated to a scene obtained by the optical device.

In a step 1202, the processor 1101 processes the $\chi_{i_{u,v}}'''$ maps, the color map, the depth map and fixed parameters $\alpha_i$, $\beta_i$, $(\gamma_i + \min(\chi_{i_{u,v}}'))$, $\max(\chi_{i_{u,v}}'')$ comprised in the SEI message, in order to reconstruct for each pixel of the sensor a point in a 3D (three-dimensional) space representative of the object of the scene, said point being sensed by said pixel of the sensor.

Indeed, it is possible to find the coordinates $x_p$ and $y_p$ of a point P in the 3D space knowing its depth $z_p$. In this case, the four parameters $\chi_1$, $\chi_2$, $\chi_3$, $\chi_4$ allow to define two points of intersection of the ray of light sensed by the considered pixel with the two parametrization planes $P_1$ and $P_2$

The point P belongs to the ray of light defined by these two points of intersection with the two parametrization planes $P_1$ and $P_2$, as shown on figure 9, and is located at a depth $z = z_p$ which is the depth value associated to the pixel in the depth map received by the apparatus 1100. The equation to obtain $\begin{pmatrix} x_p \\ y_p \end{pmatrix}$ is then

$$\begin{pmatrix} x_p \\ y_p \end{pmatrix} = \begin{pmatrix} x_1 \\ y_1 \end{pmatrix} + \frac{z_p - z_1}{z_2 - z_1}\begin{pmatrix} x_2 - x_1 \\ y_2 - y_1 \end{pmatrix} \quad \text{That is} \quad \begin{cases} x_p = x_1 + (x_2 - x_1)\frac{z_p - z_1}{z_2 - z_1} \\ y_p = y_1 + (y_2 - y_1)\frac{z_p - z_1}{z_2 - z_1} \end{cases}$$

The point P is viewed by the optical device under a given viewing direction. Since the $\chi_{i_{u,v}}'''$ maps and the fixed parameters $\alpha_i$, $\beta_i$, $(\gamma_i + \min(\chi_{i_{u,v}}'))$, $\max(\chi_{i_{u,v}}'')$ are light field data, it is possible to compute the vector $\vec{v_v}$ defining the viewing direction under which the point P is viewed by the camera.

Thus in step 1203, the processor 1101 computes the coordinates of the vector $\vec{v_v}$ as follows :

$$\vec{v_v} = -\frac{1}{\sqrt{(x_2 - x_1)^2 + (y_2 - y_1)^2 + (z_2 - z_1)^2}}\begin{pmatrix} x_2 - x_1 \\ y_2 - y_1 \\ z_2 - z_1 \end{pmatrix}$$

The steps 1201 to 1203 are performed for all pixels of the sensor of the optical device in order to generate a point cloud representing the scene obtained form, the optical device.

The set of points P computed for all the pixels of a given scene is called a point cloud. A point cloud associated with the viewing direction per point is called an "oriented" point cloud. Said orientation of the points constituting the point cloud are obtained thanks to the four maps, $\chi_{1_{u,v}}'''$ map, $\chi_{2_{u,v}}'''$ map, $\chi_{3_{u,v}}'''$ map and $\chi_{4_{u,v}}'''$ map, corresponding to each of the parameters $(\chi_1 \ \chi_2 \ \chi_3 \ \chi_4)$ representing rays of light sensed by the pixels of the sensor of the camera.

When the scene is viewed by several cameras which relative positions have been calibrated, it is possible to get for a same point P, the different viewing directions and colors associated with the different cameras. That brings more information on the scene and can help for instance extraction of lights position and/or reflectance properties of the material. Of course the re-projection of data acquired by two different cameras will not match exactly the same point P.

An approximation around a given position is defined to consider that in this range two re-projections are associated to the same point in space.

Although the present invention has been described hereinabove with reference to specific embodiments, the present invention is not limited to the specific embodiments, and modifications will be apparent to a skilled person in the art which lie within the scope of the present invention.

Many further modifications and variations will suggest themselves to those versed in the art upon making reference to the foregoing illustrative embodiments, which are given by way of example only and which are not intended to limit the scope of the invention, that being determined solely by the appended claims. In particular the different features from different embodiments may be interchanged, where appropriate.

## Claims

1. A computer implemented method for encoding a signal representative of a scene obtained from an optical device, said method comprising encoding, for at least one pixel of a sensor of said optical device:

   - a first set of parameters representing a ray of light sensed by said pixel,
   - a second set of parameters intended to be used to reconstruct said ray of light from the first set of parameters,
   - a third set of parameters representing a location along an optical axis of the optical device of an intersection of said ray of light represented by said first set of parameters with at least an object of said scene,
   - a fourth set of parameters representing color data of said object of said scene sensed by said pixel,
   said third set of parameters being for reconstructing a point cloud representing said scene together with said fourth set of parameters and said reconstructed ray of light.

2. The method according to claim 1, wherein at least one parameter of the first set of parameters represents a distance between a coordinate of said ray of light and a plane fitting a set of coordinates of a plurality of rays of light sensed by a plurality of pixels of the optical system, and at least one parameter of the second set of parameters represents coordinates of the fitting plane.

3. The method according to any of the preceding claims wherein at least one parameter of the first set of parameters represents :

   - a difference between a value representing the ray of light sensed by said pixel and a value representing a ray of light sensed by another pixel preceding said pixel in a row of the sensor, or
   - when said pixel is the first pixel of a row of the sensor, a difference between a value representing the ray of light sensed by said pixel and a value representing a ray of light sensed by the first pixel of a row preceding the row to which said pixel belongs.

4. The method according to any of the preceding claims wherein independent codecs are used to encode the parameters of the first set of parameters.

5. The method according to any of the preceding claims wherein, when the second set of parameters comprises a parameter indicating that the first set of parameters is unchanged since a last transmission of the first set of parameters, only said second set of parameters is transmitted.

6. A device for encoding a signal representative of a scene obtained from an optical device, said device comprising a processor configured to encode, for at least one pixel of a sensor of said optical device:

   - a first set of parameters representing a ray of light sensed by said pixel,
   - a second set of parameters intended to be used to reconstruct said ray of light from the first set of parameters,
   - a third set of parameters representing a location along an optical axis of the optical device of an intersection of said ray of light represented by said first set of parameters with at least an object of said scene,
   - a fourth set of parameters representing color data of said object of said scene sensed by said pixel,
   said third set of parameters being for reconstructing a point cloud representing said scene together with said fourth set of parameters and said reconstructed ray of light.

7. A computer implemented method for reconstructing a point cloud representing a scene obtained from an optical device, said method comprising,:

- decoding a signal comprising :

• a first set of parameters representing a ray of light sensed by sat least one pixel of a sensor of said optical device,
• a second set of parameters intended to be used to reconstruct the light-field content from the decoded first set of parameters,
• a third set of parameters representing a location along an optical axis of the optical device of an intersection of said ray of light represented by said first set of parameters with at least an object of said scene,
• a fourth set of parameters representing color data of said object of said scene sensed by said pixel,

- reconstructing said point cloud based on the decoded first set of parameters, the decoded second set of parameters, the decoded third set of parameters and the decoded fourth set of parameters.

**8.** The method according to claim 7, wherein reconstructing said point cloud consists in :

- computing for at least one pixel of the sensor :

• a location in a three-dimensional space of a point corresponding to the intersection of said ray of light with at least an object of said scene,
• a viewing direction along which said point is viewed by the optical device,

- associating to said computed point the parameter representing the color data sensed by said pixel of the sensor.

**9.** A device for reconstructing a point cloud representing a scene obtained from an optical device, said device comprising a processor configured to :

- decode a signal comprising :

• a first set of parameters representing a ray of light sensed by sat least one pixel of a sensor of said optical device,
• a second set of parameters intended to be used to reconstruct the light-field content from the decoded first set of parameters,
• a third set of parameters representing a location along an optical axis of the optical device of an intersection of said ray of light represented by said first set of parameters with at least an object of said scene,
• a fourth set of parameters representing color data of said object of said scene sensed by said pixel,

- reconstruct said point cloud based on the decoded first set of parameters, the decoded second set of parameters, the decoded third set of parameters and the decoded fourth set of parameters.

**10.** Signal transmitted by a device for encoding a signal representative of
a scene obtained from an optical device, said signal carrying, for at least one pixel of a sensor of said optical device, a message comprising :

- a first set of parameters representing a ray of light sensed by said pixel,
- a second set of parameters intended to be used to reconstruct said ray of light from the first set of parameters,
- a third set of parameters representing a location along an optical axis of the optical device of an intersection of said ray of light represented by said first set of parameters with at least an object of said scene,
- a fourth set of parameters representing color data of said object of said scene sensed by said pixel,
said third set of parameters being for reconstructing a point cloud representing said scene together with said fourth set of parameters and said reconstructed ray of light.

**11.** A digital file comprising data representative of a scene obtained from an optical device, said data comprising, for at least one pixel of a sensor of said optical device:

- a first set of parameters representing a ray of light sensed by said pixel,
- a second set of parameters intended to be used to reconstruct said ray of light from the first set of parameters,
- a third set of parameters representing a location along an optical axis of the optical device of an intersection of said ray of light represented by said first set of parameters with at least an object of said scene,

- a fourth set of parameters representing color data of said object of said scene sensed by said pixel,

said third set of parameters being for reconstructing a point cloud representing said scene together with said fourth set of parameters and said reconstructed ray of light.

12. A computer program **characterized in that** it comprises program code instructions for the implementation of the method according to any of claims 1 to 5 when the program is executed by a processor.

13. A computer program **characterized in that** it comprises program code instructions for the implementation of the method according to any of claims 7 to 8 when the program is executed by a processor.

**FIG. 1**

**FIG. 2**

**FIG. 3**

**FIG. 4**

Compute vector V — 501

Compute intersection of a ray of light with a plane — 502

Compute an equation of a fitting plane — 503

Compute an error $\chi'_{i_{u,v}}$ — 504

Compute $\chi''_{i_{u,v}}$ — 505

Compute $\chi'''_{i_{u,v}}$ — 506

Generate four $\chi'''_{i_{u,v}}$ maps — 507

Generate payload of SEI message — 508

**FIG. 5**

Retrieve four $\chi_{i_{u,v}}'''$ maps — 601

Generate SEI message — 602

Retrieve depth map — 603

Retrieve color map — 604

Transmission — 605

**FIG. 6**

Compute $\Delta \chi_{i_{u,v}}$ — 701

Transmission of the maps and SEI message — 702

**FIG. 7**

**FIG. 8**

**FIG. 9**

**FIG. 10**

1100

**Fig. 11**

Receive $\chi_{i_{u,v}}'''$ maps, depth map, color map and SEI mesages $\qquad$ 1201

Processing $\chi_{i_{u,v}}'''$ maps, depth map, color map and fixed parameters of the SEI message $\qquad$ 1202

Compute $\overrightarrow{v_v}$ $\qquad$ 1203

**FIG. 12**

Europäisches
Patentamt

European
Patent Office

Office européen
des brevets

# EUROPEAN SEARCH REPORT

Application Number

EP 16 30 6287

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | "Technical report of the joint ad hoc group for digital representations of light/sound fields for immersive media applications", 115. MPEG MEETING;30-5-2016 - 3-3-2016; GENEVA; (MOTION PICTURE EXPERT GROUP OR ISO/IEC JTC1/SC29/WG11), no. N16352, 13 June 2016 (2016-06-13), pages 1-79, XP030023025, * page 16, paragraph 4.1.1 * * pages 34-35, paragraph 5.1.5; figure 24; table 2 * * page 47, paragraph 7.1-7.1.1 * * pages 55-57, paragraph 7.2 * ----- | 1-13 | INV. H04N19/463 H04N19/59 H04N19/593 H04N19/597 |
| Y | SCHUMPERT J M ET AL: "A TWO-COMPONENT IMAGE CODING SCHEME BASED ON TWO-DIMENSIONAL INTERPOLATION AND THE DISCRETE COSINE TRANSFORM", IEEE INTERNATIONAL CONFERENCE ON ACOUSTICS, SPEECH AND SIGNAL PROCESSING (ICASSP '83) , BOSTON, MA, USA, 14-16 APRIL 1983, vol. 3, 14 April 1983 (1983-04-14), pages 1232-1235, XP001379896, New York, NY, USA * the whole document * ----- -/-- | 1-13 | |

TECHNICAL FIELDS
SEARCHED      (IPC)

H04N

The present search report has been drawn up for all claims

| Place of search | Date of completion of the search | Examiner |
|---|---|---|
| Munich | 27 March 2017 | Lombardi, Giancarlo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 1 of 2

Europäisches
Patentamt

European
Patent Office

Office européen
des brevets

## EUROPEAN SEARCH REPORT

Application Number

EP 16 30 6287

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Yun Q. Shi ET AL: "Differential Coding (Chapter 3)" In: "Image and Video Compression for Multimedia Engineering Fundamentals, Algorithms, and Standards", 1 January 2000 (2000-01-01), CRC Press, Boca Raton, XP055329270, ISBN: 978-0-8493-3491-7 pages 1,2,55-73, * pages 63-64, paragraph 3.3.2; figure 3.6 * | 1-13 | |
| A | "Camera Models (Chapter 3)" In: Richard Hartley ET AL: "Multiple View Geometry in Computer Vision, 2nd Edition", 1 January 2004 (2004-01-01), Cambridge University Press, New York, XP055328749, ISBN: 978-0-511-18618-9 pages i,ii,153-177, * the whole document * | 1-13 | |

TECHNICAL FIELDS
SEARCHED (IPC)

The present search report has been drawn up for all claims

| Place of search | Date of completion of the search | Examiner |
|---|---|---|
| Munich | 27 March 2017 | Lombardi, Giancarlo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)